# EUROPÄISCHE PATENTSCHRIFT

(11) **EP 1 000 680 B1**
(45) Veröffentlichungstag und Bekanntmachung des Hinweises auf die Patenterteilung: **16.07.2003**
(21) Anmeldenummer: 99121915.5
(22) Anmeldetag: 05.11.1999
(51) Int. Cl.: B21D 43/00, B21D 43/05

(54) **Modulare Transfereinrichtung mit Schwenk- und Linearantrieben**
Modular transport device with pivoting and linear drives
Dispositif de transfer modulaire avec des entraînements pivotants et linéaires

(30) Priorität: 10.11.1998 DE 19851746
(43) Veröffentlichungstag der Anmeldung: 17.05.2000
(73) Patentinhaber: Schuler Pressen GmbH & Co. KG, 73033 Göppingen (DE)
(72) Erfinder: Hofele, Hans, Dipl.-Ing., 73035 Göppingen (DE); Dangelmayr, Andreas, Dipl.-Ing., 73113 Ottenbach (DE); Eltze, Jürgen, Dr.-Ing., 73033 Göppingen (DE); Thudium, Karl, Dipl.-Ing., 73116 Wäschenbeuren (DE)
(74) Vertreter: Rüger, Barthelt & Abel Patentanwälte

(56) Entgegenhaltungen:
- DE-A- 19 654 475

## Beschreibung

Die Erfindung betrifft eine Transfereinrichtung mit den Merkmalen des Oberbegriffs des Patentanspruchs 1.

Transfereinrichtungen sind bspw. bei Karosseriepressen erforderlich. Karosserieteile werden in mehreren aufeinanderfolgenden Umformschritten aus ebenen Blechtafeln hergestellt. Dazu weisen Karosseriepressen mehrere Pressenstufen auf, die mit gleicher Hubzahl arbeiten. Wenn die Werkzeuge der einzelnen Pressenstufen öffnen, müssen die Werkstücke umgesetzt werden, um der jeweils nächstfolgenden Verarbeitungsstufe zugeführt zu werden. Dazu dienen Transfereinrichtungen.

Weiter ist aus der DE 196 54 475 bekannt, eine Transfereinrichtung für auf einem vorgegebenen Weg zu transportierende Werkstücke, insbesondere für den Transport von Werkstücken entlang mehrerer aufeinanderfolgender Arbeitsstationen mit einer Quertraverse, die mit wenigstens einem Festhaltemittel versehen ist, das dazu dient, Werkstücke gesteuert aufzunehmen und freizugeben, mit einem Trägermittel, an dem die Quertraverse mit beiden Enden gehalten ist und mittels dessen das Festhaltemittel auf einer vorgegebenen Transferkurve geführt wird, und mit einem auf das Trägermittel wirkenden Antriebsmittel, mittels dessen die Quertraverse in zwei voneinander unabhängigen Richtungen antreibbar ist und das weigstens eine erste und eine zweite Antriebseinheit aufweist, die voneinander unabhängig ansteuerbar sind, wobei zu dem Trägermittel ein erstes, mit einem Ende der Quertraverse verbundenes Lenkergetriebe sowie ein zweites, mit dem anderen Ende der Quertraverse verbundenes Lenkergetriebe gehört, und dass die Quertraverse von den Lenkergetrieben getragen und über die Lenkergetriebe von den Antriebseinheiten an ihren beiden Enden synchron getrieben ist.

Aus der DE 41 43 099 A1 ist eine solche Transfereinrichtung bekannt. Diese weist sogenannte Saugerbrücken auf, die durch einen Querträger mit daran vorgesehenen vakuumbetätigten Saugmitteln gebildet sind. Diese sind dazu eingerichtet, die Blechteile aufzunehmen und gesteuert wieder freizugeben. Die Saugerbrücken sind an beiden Enden an Laufwagen gehalten, die auf Laufschienen verfahrbar gelagert sind. Die Laufschienen erstrecken sich parallel und im Abstand zueinander durch die gesamte Länge einer Transferpresse. Zum Werkstücktransport fahren die Saugerbrücken in geöffnete Werkzeuge ein, nehmen ein Werkstück auf und fahren diese zu einer Zwischenablage oder nehmen die Werkstücke in der Zwischenabiage auf und fahren in das geöffnete nächste Werkzeug. Zum Antrieb der Laufwagen ist ein Gestänge vorgesehen, das zu einem Kurvengetriebe führt. Dieses steht mit dem Pressenhauptantrieb in Verbindung. Der auf diese Weise erzielten hinund hergehenden Bewegung der Transferschienen ist eine Hebe- und Senkbewegung überlagert. Diese wird erzeugt, indem die Laufschienen insgesamt gehoben und gesenkt werden. Dazu dienen Hubeinheiten.

Eine solche Transfereinrichtung bewegt die mit einem Kurvengetriebe in Verbindung stehenden Saugerbrücken synchron. Entsprechend müssen die beteiligten Werkzeuge gleichzeitig öffnen und schliessen.

In vielen Fällen wird eine flexiblere Transfereinrichtung gewünscht.

Aus der WO 93/0185 ist ein modulares Transfersystem bekannt. Zwischen einzelnen Pressenstufen sind Transfermodule angeordnet, die unabhängig voneinander ansteuerbar sind. Zu jedem Transfermodul gehört eine Saugerbrücke, deren Trägerelement sich quer zu der Transportrichtung horizontal erstreckt. An seinen beiden Enden ist das Trägerelement von Antriebseinheiten getragen. Die Antriebseinheiten sind symmetrisch zueinander aufgebaut. Jede Antriebseinheit enthält eine Hubeinheit, die ortsfest gelagert ist und eine lineare Hebe- und Senkbewegung erzeugt. Diese wird unmittelbar an das Trägerelement übertragen. Zwischen der Hubeinheit und dem Trägerelement ist ein Kurbelgetriebe angeordnet, das eine Bewegung der Saugerbrücke in Transportrichtung bewirken soll. Das Kurbelgetriebe wird durch eine Doppelkurbel in Verbindung mit einem Planetengetriebe gebildet. Die Kurbeln des Kurbelgetriebes und die Zahnräder des Planetengetriebes sind um zueinander parallele Vertikalachsen dreh- bzw. schwenkbar. Dies ergibt eine starke Kippbeanspruchung an den einzelnen Lagern und Gelenken des Kurbelgetriebes, die zu Verschleiss- und Genauigkeitsproblemen führen kann. Außerdem schwenken die Kurbeln bei ihrer Schwenkbewegung um vertikale Drehachsen seitlich aus. Dafür ist entsprechender Platz freizuhalten, was eine gewisse Einschränkung darstellt.

Davon ausgehend ist es Aufgabe der Erfindung, eine Transfereinrichtung zu schaffen, die in einer Stufenpresse vorhandenen Bauraum nutzt und möglichst platzsparend ausgebildet ist.

Diese Aufgabe wird mit einer Transfereinrichtung gelöst, die die Merkmale des Patentanspruchs 1 aufweist.

Die erfindungsgemäße Transfereinrichtung ist modular aufgebaut und beinhaltet mehrere voneinander unabhängig ansteuerbare Transfermodule. Jedes Transfermodul ist dabei zwischen zwei Stationen der Stufenpresse oder anderweitigen Anlage angeordnet. Die Stationen können Pressenstufen oder anderweitige Bearbeitungsstationen oder Orientierstationen sein.

Durch die unabhängige Ansteuerbarkeit der Transfermodule wird es möglich, Pressenstufen zeitlich versetzt arbeiten zu lassen.

Die Werkstückhaltemittel, die bspw. durch Saugerbrücken gebildet werden, sind von einem Schwenkarm geführt, der um eine Schwenkachse schwenkbar gelagert ist. Die erfindungsgemäße Anordnung der Schwenkachse, abweichend von der Vertikalen und vorzugsweise horizontal, gestattet einen kompakten Pressenaufbau.

Der Antrieb des Schwenkarms enthält eine Kombination aus einem Linearantrieb und einem Dreh- oder Schwenkantrieb. Das Bestreben geht dahin, eine Mehrstufenpresse möglichst kurz auszubilden. Deshalb wird versucht, die einzelnen Pressenstufen bzw. die entsprechenden Tische in möglichst geringem Abstand zueinander aufzustellen. Der geringstmögliche Abstand ist durch den Platzbedarf der Pressenständer gegeben, wenn Schiebetische zwischen den Pressenständern seitlich nach außen gefahren werden sollen. Die Pressenständer sind deshalb nicht allzu breit. Entsprechend knapp ist der Platz für die hier angeordneten Transfermodule bemessen. Mit der Kombination aus Linearantrieb und Schwenkantrieb wird es möglich, diesen Platz gut auszunutzen. Beispielsweise braucht an einem Pressenständer nur ein einziger Linearantrieb angeordnet werden, der relativ schmal baut. Der Schwenkantrieb kann auf einem von dem Linearantrieb bewegten Linearschlitten angeordnet werden, wodurch kein zusätzlicher Platzbedarf in Transportrichtung entsteht.

Die erfindungsgemäße Anordnung der Schwenkachse des Schwenkarms führt dazu, dass der Schwenkarm eine Vertikalposition einnehmen kann, in der er praktisch parallel zu den Pressenständern und auch parallel zu der Arbeitsrichtung der Pressenstößel steht. Der Platzbedarf ist in dieser Position minimal. Öffnen die Werkzeuge und soll ein Transferhub durchgeführt werden, schwenkt der Schwenkarm zu dem in Transportrichtung vorgelagerten oder nachgeordneten Werkzeug aus. Er führt dabei jedoch keine seitlich ausladende Bewegung oder sonstige Bewegung aus, die zu einer Kollision mit dem Werkzeug oder mit Pressenteilen führen könnte. Sowohl in Parkposition (senkrechter Schwenkarm) als auch in der maximal ausladenden Position (Schwenkarm ist schräg geneigt) als auch in allen Zwischenpositionen bleibt der Platzbedarf des Transfermoduls bescheiden.

Die im Wesentlichen horizontale Anordnung der Schwenkachse und der Drehachse der Abtriebswelle des Schwenkantriebs führen dazu, dass die an dem Schwenkarm auftretenden Lasten an den betreffenden Lagerstellen als Radiallast und nicht als Kippbeanspruchung in Erscheinung treten. Dies führt zu einer präzisen Führung des Werkstückhaltemittels durch den oder die Schwenkarme und zu moderaten Lagerreaktionskräften. Das ermöglicht wiederum eine relativ leichte Lagerauslegung und eine entsprechend hohe Dynamik des Transfermoduls bei guter Positioniergenauigkeit und geringem Verschleiß infolge geringer Materialbelastung.

Das Transfermodul ist vorzugsweise zweiachsig ausgebildet und legt somit eine Transferkurve fest, die in einer planen Ebene verläuft. Beispielsweise ist dies eine gedachte, in Transportrichtung verlaufende Vertikalebene. Die Transferkurve K enthält nur Bewegungskomponenten in Transferrichtung und zusätzlich in Vertikalrichtung. Die Schwenkachsen der Schwenkarme können dabei quer zu der Transportrichtung orientiert sein. Wird ein seitlicher Versatz der Werkstücke während des Durchlaufs durch aufeinanderfolgende Pressenstufen gewünscht, können die Schwenkachsen der Schwenkarme auch in einem von 90° verschiedenen Winkel zu der Transportrichtung quer verlaufend angeordnet sein. Bedarfsweise kann die Winkellage einstellbar sein.

Außerdem ist die Schwenkachse vorzugsweise in einem rechten Winkel zu der Bewegungsrichtung des Linearantriebs orientiert, der vorzugsweise in Vertikalrichtung arbeitet. Damit wird die dynamische Belastung der Linearführung, die vorwiegend durch das Beschleunigen und Abbremsen der Werkstücke auftritt, von der seitlichen Führung des an der Linearführung vorgesehenen Schlittens abgefangen und wirkt wenig oder nicht auf den Hubantrieb zurück. Gleichzeitig sind die dynamischen Lagerreaktionen an den Schwenkachsen in Radialrichtung orientiert. Insgesamt ergibt sich somit ein präziser, statisch und dynamisch günstiger Aufbau. Es ergeben sich unterschiedliche Ausführungsmöglichkeiten. Beispielsweise kann der Linearantrieb ortsfest gelagert sein, während der Schwenkantrieb bspw. auf einem von dem Linearantrieb angetriebenen Schlitten angeordnet ist. Der Schwenkantrieb kann den Schwenkarm direkt antreiben. Für eine Bewegung des Werkstückhaltemittels in Transportrichtung ohne Hebe- und Senkkomponente ist dann das Ansteuern beider Antriebe erforderlich. Es ist alternativ möglich, den Schwenkarm an einem nicht angetriebenen, zweiten Schlitten schwenkbar zu lagern, der parallel zu dem erstgenannten Schlitten oder fluchtend mit diesem verschiebbar ist. Der Schwenkantrieb betätigt den Schwenkarm bspw. über einen Lenker. Ist der Lenker halb so lang wie der Schwenkarm und greift in dessen Mitte an, ergibt sich eine Bewegungsentkopplung. Der Schwenkantrieb bewirkt dann lediglich einen Vorschub in Transportrichtung während die Hubeinheit ausschließlich noch das Heben und Senken des Werkstückhaltemittels bewirkt.

Einzelheiten vorteilhafter Ausführungsformen der Erfindung sind Gegenstand von Unteransprüchen, ergeben sich aus der Zeichnung und/oder der zugehörigen Beschreibung.

In der Zeichnung sind Ausführungsbeispiele der Erfindung veranschaulicht. Es zeigen:
- Fig. 1: eine Pressenstraße mit modularem Transfer und mehreren aufeinanderfolgenden Pressenstufen, in einer schematisierten ausschnittsweisen Perspektivansich
- Fig. 2: zwei Pressenstufen mit dazwischen angeordnetem. Transfermodul, in schematisierten perspektivischer Darstellung,
- Fig. 3: die Kinematik des Transfermoduls nach Fig. 2 in Prinzipdarstellung,
- Fig. 4: eine abgewandelte Kinematik eines Transfermoduls,
- Fig. 5 bis 7: weitere Ausführungsformen von Transfermodulen, dargestellt anhand ihrer jeweiligen Kinematik.

### Figurenbeschreibung

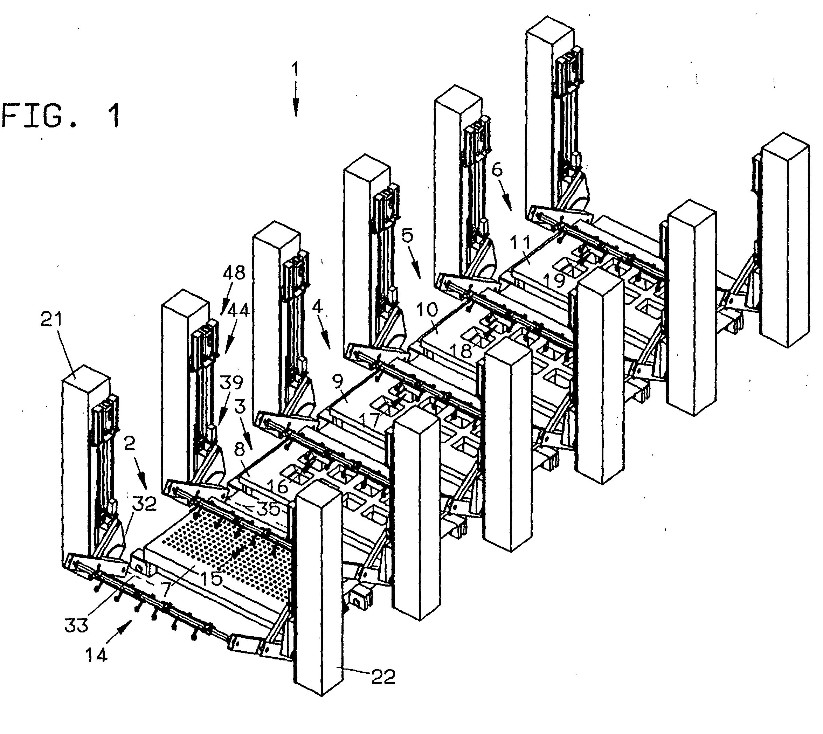

In Fig. 1 ist eine Stufenpresse 1 mit mehreren aufeinanderfolgenden Pressenstufen 2, 3, 4, 5, 6 veranschulicht. Zu den Pressenstufen 2 bis 6 gehören Pressenschiebetische 7, 8, 9, 10, 11, auf denen nicht weiter dargestellte Werkzeuge angeordnet sind. Um den Teiletransport in die Pressenstufen 2 bis 6 und aus diesen heraus sowie die Überführung von Werkstücken von Pressenstufe zu Pressenstufe zu ermöglichen sind jeweils vor und hinter jeder Pressenstufe 2 bis 6 Transfermodule 14, 15, 16, 17, 18, 19 angeordnet. Diese sind dazu eingerichtet, Werkstücke, bspw. Karosserieteile von Kraftfahrzeugen, aufzunehmen, vorwärts zu transportieren und abzulegen. Die Transfermodule 14 bis 19 sind dabei unabhängig voneinander ansteuerbar, so dass sie nicht zwingend im Gleichtakt arbeiten müssen. Dies eröffnet die Möglichkeit, die Hubzahl der Presse zu maximieren und die Transferbewegung für jede Pressenstufe zu otpimieren. Außerdem können einzelne Pressenstufen 2 bis 6 versetzt arbeiten.

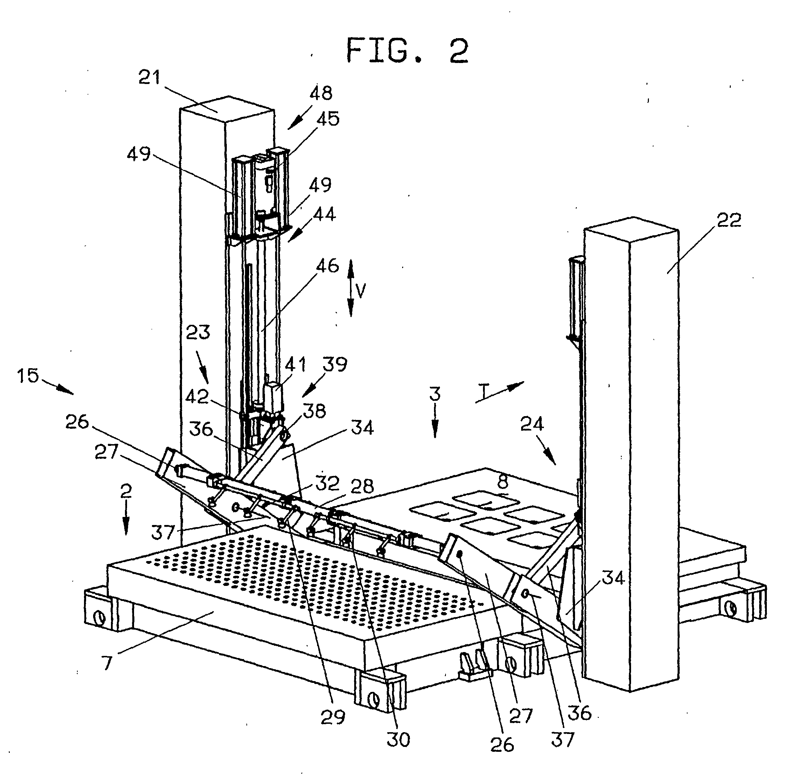

Die Transfermodule 14 bis 19 sind untereinander gleich aufgebaut. Stellvertretend für alle.anderen Transfermodule 14, 16, 17, 18, 19 wird nachfolgend anhand der Fig. 2 das Transfermodul 15 detaillierter beschrieben.:

Das Transfermodul 15 ist an zwei Pressenständern 21, 22 angeordnet, die zwischen den Pressenstufen 2, 3 aufgestellt sind. Bedarfsweise kann das Transfermodul jedoch auch anderweitig befestigt oder gelagert sein. Zu dem Transfermodul 15 gehören zwei Hebelgetriebe 23, 24, die den Presseständern 21 bzw. 22 zugeordnet sind.

Die Hebelgetriebe 23, 24 und deren entsprechende Antriebe sind symmetrisch zu einer längs der Transportrichtung T gedachten Vertikalebene ausgebildet. Die nachfolgende Beschreibung des Hebelgetriebes 23 gilt deshalb entsprechend für das Hebelgetriebe 24. Beide Hebelgetriebe 23, 24 weisen jeweils einen Abtrieb 26 auf, der durch eine entsprechende Aufnahme an einem Ende eines Schwenkarms 27 gebildet ist. In der Aufnahme sitzt gegebenenfalls schwenkbar jeweils ein Ende einer Saugerbrücke 28, die sich quer zu der Transportrichtung T erstreckt. Die Saugerbrücke 28 dient als Werkstückhaltemittel und wird im Wesentlichen durch ein Profilrohr gebildet, das ein oder mehrere Saugerspinnen 29, 30 trägt. Diese weisen jeweils mehrere an kurzen Armen von der Saugerbrücke 28 wegstehende Saugnäpfe auf.

Der Schwenkarm 27 des Hebelgetriebes 23 ist an seinem von.der Aufnahme 26 abliegenden Ende in einer Bogenführung 32 schwenkbar gelagert, die, wie insbesondere aus Fig. 1 hervorgeht, eine quer zu der Transportrichtung T orientierte horizontale Schwenkachse 33 festlegt.

Die Bogenführung 32 ist an einem Führungsschlitten 34 gelagert, der von einer an dem Pressenständer 21, 22 gehaltenen Linearführung vertikal verschiebbar gelagert ist. Der Führungsschlitten 34 ist dabei in Vertikalrichtung V frei verschiebbar. Die Schwenkachse 33 ist dadurch in ihrer Radialrichtung, d.h. vertikal verstellbar.

Zu dem Hebelgetriebe 23 gehört außer dem Schwenkarm 27 ein Lenker 36, der an einem Ende an einem eine Schwenkachse 37 festlegenden Gelenk schwenkbar an dem Schwenkarm 27 gelagert ist. Die Schwenkachse 37 ist dabei parallel zu der Schwenkachse 33 orientiert. Mit seinem von dem Schwenkarm 27 abliegenden Ende ist der Lenker 36 mit einer Abtriebswelle 38 einer Schwenkantriebseinheit 39 verbunden. Diese gibt die Schwenkposition des Lenkers 36 vor. Zu der Schwenkantriebseinheit 39 gehören einen Stellmotor 41, der über ein Untersetzungs- und Winkelgetriebe auf die Abtriebswelle 38 wirkt.

Die Schwenkantriebseinheit 39 ist auf einem Linearschlitten 42 gelagert, der in Vertikalrichtung V verstellbar ist. Die Verschiebungsrichtung des Linearschlittens 42 stimmt mit der des Linearschlittens 34 überein. Der Linearschlitten 42 ist mit einer Linearantriebseinheit 44 verbunden zu der ein Stellmotor 45 gehört. Dieser ist über ein Spindelhubgetriebe 46 mit dem Linearschlitten 42 verbunden, um dessen Höhenposition einzustellen. Das Spindelhubgetriebe 46 wandelt die Drehbewegung des Stellmotors 45 in eine Hubbewegung.

Zum Ausgleich und zur Entlastung der Antriebseinheiten, d.h. der Schwenkantriebseinheit 39 und der Linearantriebseinheit 44 von dem Gewicht des Hebelgetriebes 23, der Saugerbrücke 28 und eventueller Werkstücke ist an dem Pressenständer 21 eine Gewichtsausgleichseinrichtung 48 angeordnet, zu der ein oder zwei Pneumatikzylinder 49 gehören. Diese beaufschlagen den Linearschlitten 42 mit einer nach oben gerichteten Kraft.

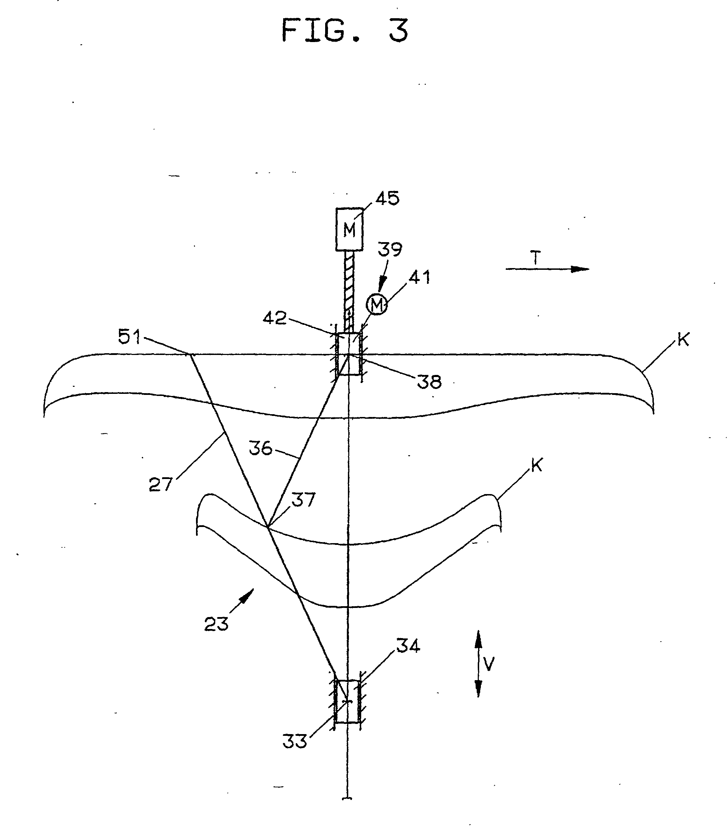

Die Kinematik des Hebelgetriebes 23 ist insbesondere aus Fig. 3 ersichtlich. Die Länge des an dem Linearschlitten 34 gelagerten Schwenkarms 27, gemessen zwischen der Schwenkachse 33 und einer Mittelachse 51 der Saugerbrücke 28, um die diese gegebenenfalls schwenkbar sein kann, ist doppelt so groß wie die Länge des Lenkers 36. Dessen Länge bestimmt sich aus dem Abstand der Gelenkachse 37 von der Drehachse der Abtriebswelle 38. Die Gelenkachse 37 ist dabei genau in der Mitte des Schwenkarms 27 angeordnet.

Die insoweit beschriebenen Transfereinheit 15 arbeitet wie folgt:

Es wird angenommen, dass die in Fig. 3 durch ihre Schwenkachse 51 angedeutete Saugerbrücke 28 und der Schwenkarm 27 in der dargestellten Position befindlich sind. Zum Durchlaufen einer Transferkurve K muss die Saugerbrücke 28 nun ohne Höhenverstellung in Transferrichtung T geführt werden. Dazu wird die Schwenkantriebseinheit 39 so angesteuert, dass der Lenker 36 in Fig. 3 gegen den Uhrzeigersinn läuft. Ohne Ansteuerung der Linearantriebseinheit 44 durchläuft die Saugerbrücke 28 eine gerade Bahn, wobei der Linearschlitten 34 eine Ausgleichbewegung in Vertikalrichtung V ausführt. Zum Ablegen eines Werkstücks in dem Werkzeug einer nachfolgenden Pressenstufe ist die Transferkurve K nach unten gekrümmt. Unter Abbremsung der Schwenkantriebseinheit 39 wird diese Bahnkurve durchlaufen, indem zügleich die Linearantriebseinheit 44 angesteuert wird, um den Linearschlitten 42 nach unten zu verfahren. Die Bewegung in Transferrichtung T wird somit allein von der Schwenkantriebseinheit 39 und die Bewegung in Vertikalrichtung in Richtung V allein von der Linearantriebseinheit 44 gesteuert. Entsprechend werden die übrigen Abschnitte der Transferkurve K durch geeignete Ansteuerung der Stellmotoren 41, 45 durchlaufen. Dies wird von einer nicht weiter veranschaulichten, vorzugsweisen computergesteuerten Steuereinrichtung bewerkstelligt.

Die Hubbewegung der Linearantriebseinheit 44 wird 1:1 auf die Saugerbrücke 28 übertragen. Jedoch wird die Bewegung in Transferrichtung T ins Schnelle übersetzt, was bedeutet, dass sich der Abtrieb schneller bewegt als alle anderen Punkte des Hebelgetriebes. Dies erfolgt durch die unmittelbare Übertragung der Schwenkbewegung von dem Lenker 36 auf den Schwenkarm 27 ohne Zuhilfenahme von Zwischengetrieben, Zahnrädern oder dergleichen und durch den relativ großen Abstand zwischen der Gelenkachse 37 und der Schwenkachse 33 mit hoher Präzision. Um eine schnelle Transportbewegung der Saugerbrücke 28 zu erreichen, muss der Schwenkarm 36 nur relativ langsam verschwenkt werden. Damit sind sowohl die an der Schwenkantriebseinheit 39 auftretenden Hebe- und Senkgeschwindigkeiten des Schlittens 42, als auch die von der Schwenkantriebseinheit 39 erzeugte Stellbewegung relativ langsam. Vorhandene Massen erzeugen nur kleine Trägheitskräfte. Die einzelnen Elemente können deshalb ohne Zugeständnisse an Leichtbaumaßnahmen stabil ausgelegt werden. Die Bewegung der Schwenkantriebseinheit 39 mit dem Linearschlitten 42 beeinträchtigt die erzielbaren Beschleunigungs- und Bremswerte nicht.

Das Gewicht der Werkstücke und der Elemente des Hebelgetriebes greift an allen Lagerstellen quer zu den Achsen, bspw. der Gelenkachse 37 und der Schwenkachse 33 an. Gelenke und Lager sind jedoch frei von Biegebeanspruchungen. Die Lager und Gelenke können dadurch bei guter Stabilität schmal und platzsparend ausgelegt werden. Die Kombination von Linear- und Schwenkantrieb ergibt außerdem einen platzsparenden und hinsichtlich der Antriebsdynamik günstig ausgelegten Antrieb.

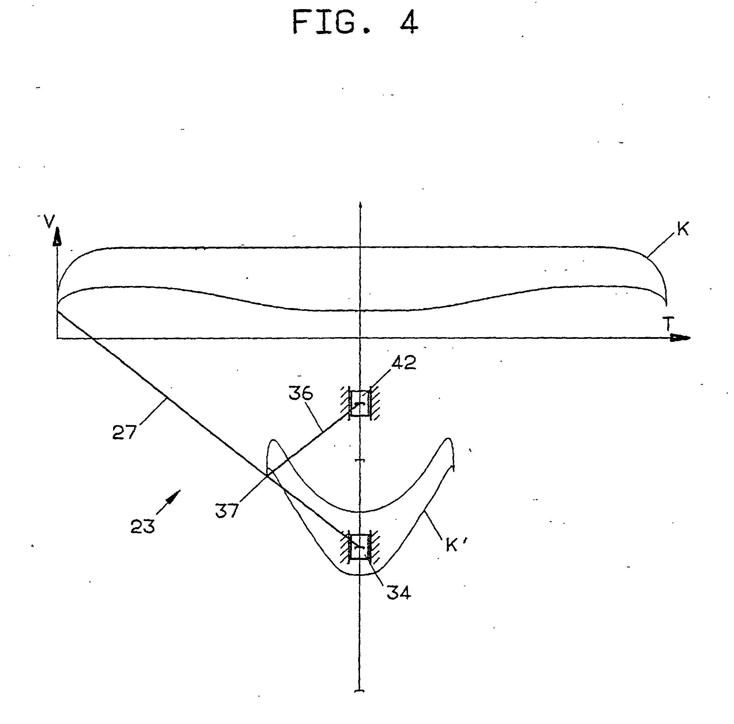

Während bei dem Transfermodul 15 mit der Kinematik nach Fig. 3 eine vollständige Entkopplung zwischen der Transferbewegung, die allein der Schwenkantriebseinheit 39 zugeordnet ist, und der Hubbewegung, die allein der Linearantriebseinheit 44 zugeordnet ist, erreicht wurde, ist in Fig. 4 eine Antriebseinrichtung mit abweichender Kinematik veranschaulicht. Diese unterscheidet sich zunächst im Wesentlichen durch die Längenverhältnisse des Schwenkarms 27 und des Lenkers 36, von denen nach Fig. 3. Durch die unsymmetrische Teilung des Schwenkarms 27 wird, wie durch Vergleich der Transferkurve K mit der von der Schwenkachse 37 durchlaufenden Lurve K' ersichtlich ist, eine vergleichsweise stärkere Übersetzung ins Schnelle erzielt. Dies kann vorteilhaft sein. Außerdem baut der Antrieb insgesamt kompakter oder es können bei gleicher Größe von Lenker 36 und zugeordneten Antrieben längere Transferkurven K erreicht werden. Außerdem kann die Schwenkantriebseinheit 39 an anderen Stellen des Hebelgetriebes 23 angeordnet werden. Bedarfsweise kann er bspw. an der Verbindungsstelle zwischen dem Lenker 36 und dem Schwenkarm 37 angeordnet werden. Alternativ ist eine Anordnung an dem Linearschlitten 34 möglich.

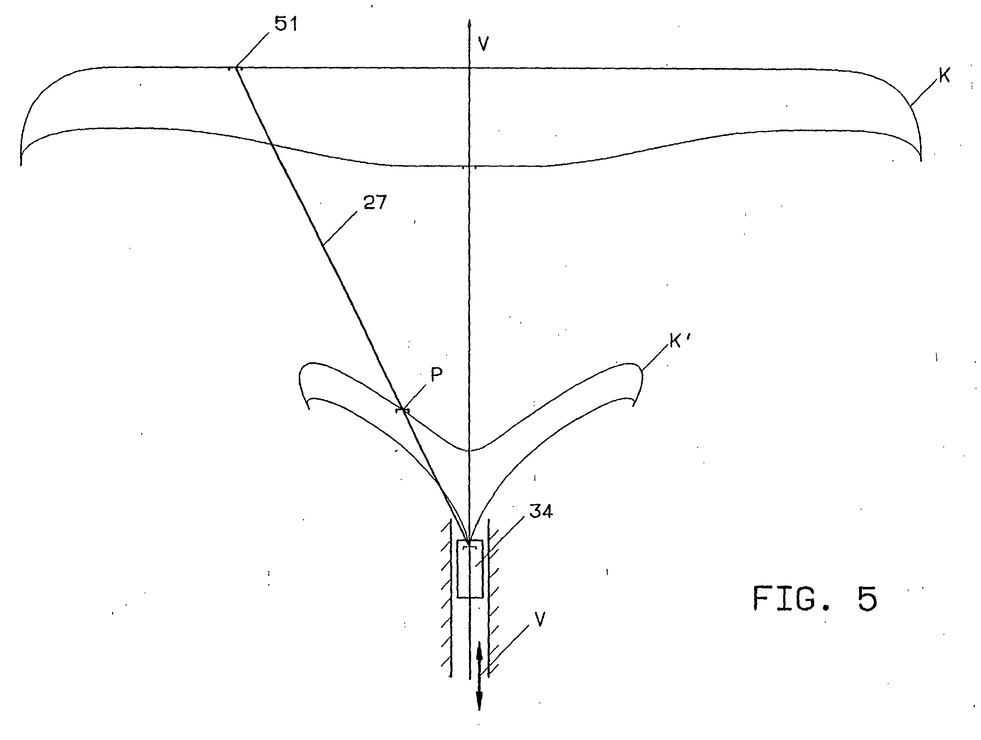

Ausgehend davon kann auf den Lenker 36 verzichtet werden, wenn der den Linearantrieb tragende Linearschlitten 34 seinerseits mit einer Linearantriebseinrichtung in Verbindung steht, die der Verstellung des Linearschlittens 34 in Vertikalrichtung V bewirkt. Der Schwenkarm 27 übernimmt wiederum die Übersetzung ins Schnelle, wie der Vergleich der von einem beliebigem Punkt P des Schwenkarms 27 durchlaufenden Kurve K' mit der Transferkurve K zeigt (Fig. 5).

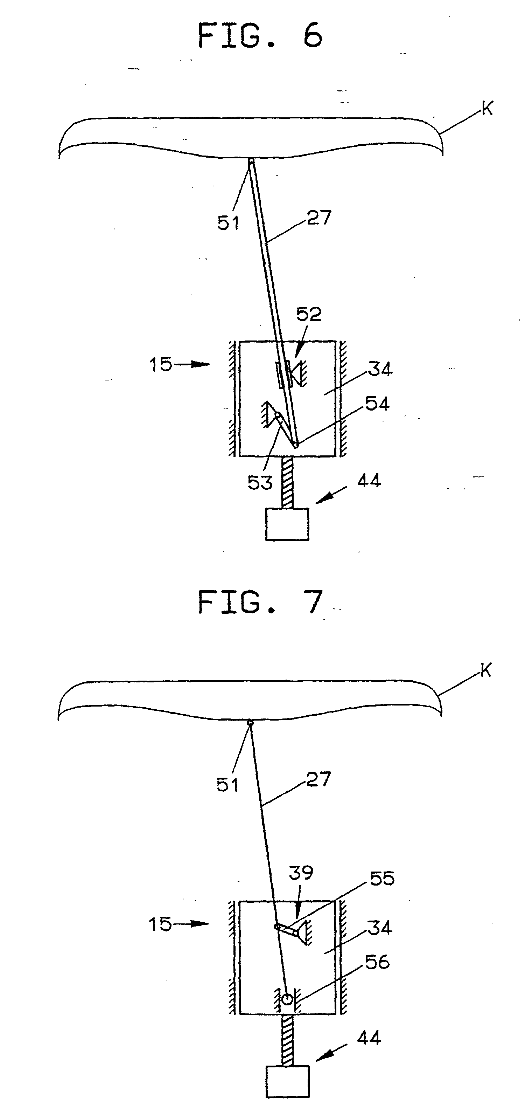

Weitere Ausführungsmöglichkeiten sind in Fig. 6 und 7 veranschaulicht. Bei der Ausführungsform nach Fig. 6 ist der Linearschlitten 34 mit der Linearantriebseinheit 44 verbunden. Der Schlitten 34 trägt außerdem eine schwenkbar gelagerte Linearführung 52. Deren Führungsrichtung ist parallel zu der Längsrichtung des Schwenkarms 27 orientiert und sie lagert diesen. Selbst ist die Führungseinrichtung 52 um eine Schwenkachse gelagert, die rechtwinklig auf einer von der Transferkurve K beschriebenen Ebene steht.

An seinem von der Schwenkachse 51 abliegendem Ende ist der Schwenkarm 27 mit einer Antriebseinrichtung verbunden. Diese kann einen Lenker 53 aufweisen, der bei einer Gelenkachse 54 schwenkbar mit dem Ende des Schwenkarms 27 verbunden ist. Das andere Ende des Lenkers 53 ist mit einer nicht weiter veranschaulichten Drehantriebseinheit verbunden.

In Fig. 7 ist eine weiter abgewandelte Ausführungsform des Transfermoduls 15 mit ruhender Linearantriebseinheit 44 und mit dem Schlitten 34 mit bewegter Schwenkantriebseinheit 39 veranschaulicht. Das untere Ende des Schwenkarms 27 ist in einer Linearführung 56 vertikal verschiebbar gelagert, während der Schwenkarm 27 an einer davon beabstandeten Stelle mit einem Lenker 55 verbunden ist. Dieser verbindet den Schwenkantrieb 39 mit dem Schw enkarm 27.

Eine Transfereinrichtung, insbesondere für den Transfer von Werkstücken in Mehrstufenpressen 1, besteht aus mehreren Transfermodulen 14 bis 19, die jeweils ein von wenigstens einem Hebelgetriebe 23 getragenes Werkstückhaltemittel 28 aufweisen. Jedes Hebelgetriebe überträgt die Stellbewegung zweier voneinander unabhängiger Antriebe 39, 44 auf das Werkstückhaltemittel 28. Dabei ist einer der Antriebe 39, 44 ortsfest gelagert und der andere von dem ortsfest gelagerten Antrieb bewegt. Dies Grundprinzip eröffnet viele Gestaltungsmöglichkeiten.

## Patentansprüche

1. Transfereinrichtung (1), insbesondere zum Transfer von Werkstücken, insbesondere Karosserieteilen für Kraftfahrzeuge, zwischen Stationen (2, 3, 4, 5, 6) einer Bearbeitungsanlage, insbesondere zwischen Pressenstufen einer Mehrstationenpresse,
mit Transfermodulen (14, 15, 16, 17, 18, 19), die zwischen Stationen (2, 3, 4, 5, 6) einer Anlage angeordnet sind,
wobei jedes Transfermodul (14, 15, 16, 17, 18, 19) ein steuerbares Werkstückhaltemittel (28) aufweist, das dazu eingerichtet ist, das Werkstück zeitweilig an eine Trägereinrichtung (29, 30) anzukoppeln, und
wobei jedes Transfermodul (14, 15, 16 , 17, 18, 19) wenigstens ein Getriebe (23) mit einem Schwenkarm (27), der mit dem Werkstückhaltemittel (28) verbunden ist und dieses auf einer wenigstens zweidimensionalen Transferkurve (K) führt, sowie wenigstens eine Linearantriebseinheit (44) und eine Schwenkantriebseinheit (39) aufweist, mittels derer der Schwenkarm (27) um eine Schwenkachse (33) schwenkbar ist,
wobei die Schwenkachse (33) des von der Schwenkantriebseinheit (39) angetriebenen Schwenkarms (27) von der Vertikalen (V) abweichend orientiert ist, **dadurch gekennzeichnet, dass** die Linearantriebseinheit (44) vorzugsweise an Pressenständern ortsfest gelagert und die Drehantriebseinheit (39) an einer von der Linearantriebseinheit (44) bewegten Trägereinrichtung (42) angeordnet ist.

2. Transfereinrichtung nach Anspruch 1, **dadurch gekennzeichnet, dass** die Schwenkantriebseinheit (39) einen Abtrieb (38) aufweist, dessen Drehachse mit der parallel zu der Schwenkachse (33) ausgerichtet ist oder mit dieser übereinstimmt.

3. Transfereinrichtung nach Anspruch 2, **dadurch gekennzeichnet, dass** die Schwenkachse (33) horizontal angeordnet ist.

4. Transfereinrichtung nach Anspruch 1, **dadurch gekennzeichnet, dass** die Schwenkachse (33) quer zu der Transportrichtung (T) orientiert und vertikal verstell- bzw. bewegbar ist.

5. Transfereinrichtung nach Anspruch 1, **dadurch gekennzeichnet, dass** die Stationen (2, 3, 4, 5, 6) Pressenstufen sind, in denen die Werkstücke durch einen in einer Bearbeitungrichtung (V) hin- und hergehend angetriebenen Stößel umgeformt werden, wobei die Schwenkachse (33) in einer von der Bearbeitungsrichtung (V) abweichenden Richtung, vorzugsweise rechtwinklig zu dieser orientiert ist.

6. Transfereinrichtung nach Anspruch 1, **dadurch gekennzeichnet, dass** die Linearantriebseinheit (44) einen Abtrieb (42) aufweist, der linear in einer Richtung (V) bewegbar ist, die in einem Winkel zu der Schwenkachse (33) orientiert ist.

7. Transfereinrichtung nach Anspruch 6, **dadurch gekennzeichnet, dass** die Richtung der Bewegung der Linearantriebseinheit (44) die Vertikalrichtung (V) ist.

8. Transfereinrichtung nach Anspruch 1, **dadurch gekennzeichnet, dass** die Drehantriebseinheit (39) und die Linearantriebseinheit (44) als Antriebsquelle jeweils einen Stellmotor (41, 45) aufweisen.

9. Transfereinrichtung nach Anspruch 1, **dadurch gekennzeichnet, dass** der Schwenkarm (27) in einer Mittelstellung oder Parkstellung eine Vertikalposition einnimmt von der er zu beiden benachbarten Stationen (2, 3) um einen im Wesentlichen gleichen Winkelbetrag in der und gegen die Transportrichtung (T) ausschwenken kann.

10. Transfereinrichtung nach Anspruch 1, **dadurch gekennzeichnet, dass** das Getriebe (23) ein Hebelgetriebe ist, zu dem der Schwenkarm (27) gehört.

11. Transfereinrichtung nach Anspruch 9, **dadurch gekennzeichnet, dass** das Hebelgetriebe (23) an seinem Abtrieb (26) eine übersetzte Bewegungskurve erzeugt.

12. Transfereinrichtung nach Anspruch 1, **dadurch gekennzeichnet, dass** das Transfermodul (15) zwei zueinander spiegelsymmetrische Getriebe (23, 24) aufweist, dass das Werkstückhaltemittel (28) eine Saugerbrücke ist und dass die Saugerbrücke an ihren beiden Enden jeweils von einem Schwenkarm (27) eines der Getriebe (23) gtragen ist.

13. Transfereinrichtung nach Anspruch 1, **dadurch gekennzeichnet, dass** dem Transfermodul (15) wenigstens eine Gewichtsentlastungseinrichtung (48) zugeordnet ist.

14. Transfereinrichtung nach Anspruch 1, **dadurch gekennzeichnet, dass** die Transferkurve (K) zwei unabhängige Bewegungskomponenten (V, T) aufweist, in denen unterschiedlich lange Wege durchlaufen werden, wobei dem kurzen Weg die Linearantriebseinheit (44) und dem langen Weg die Schwenkantriebseinheit (39) zugeordnet ist.

15. Transfereinrichtung nach Anspruch 9, **dadurch gekennzeichnet, dass** das Hebelgetriebe (23) in einer Vertikalebene angeordnet ist.

16. Transfereinrichtung nach Anspruch 9, **dadurch gekennzeichnet, dass** alle Gelenk- und Schwenkachsen (33, 37,38,51) des Hebelgetriebes (23) horizontal und quer zu der Transportrichtung (T) angeordnet sind.

## Claims

1. Transfer device (1), in particular for the transfer of workpieces, in particular bodywork parts for motor vehicles, between stations (2, 3, 4, 5, 6) of a machining installation, in particular between pressing stages of a multi-station press,
having transfer modules (14, 15, 16, 17, 18, 19) which are arranged between stations (2, 3, 4, 5, 6) of an installation,
each transfer module (14, 15, 16, 17, 18, 19) having a controllable workpiece-retaining means (28) which is set up for the purpose of coupling the workpiece temporarily to a carrier device (29, 30), and
each transfer module (14, 15, 16, 17, 18, 19) having at least one mechanism (23) having a pivoting arm (27), which is connected to the workpiece-retaining means (28) and guides the latter on an at least two-dimensional transfer curve (K), and having at least one linear drive unit (44) and a pivoting drive unit (39), by means of which the pivoting arm (27) can be pivoted about a pivot axis (33),
the pivot axis (33) of the pivoting arm (27), which is driven by the pivoting drive unit (39), being orientated in a manner such that it deviates from the vertical (V), **characterized in that** the linear drive unit (44) is preferably mounted in a positionally fixed manner on press stands and the pivoting drive unit (39) is arranged on a carrier device (42), which is moved by the linear drive unit (44).

2. Transfer device according to Claim 1, **characterized in that** the pivoting drive unit (39) has a main drive pinion (38), the axis of rotation of which is aligned parallel to the pivot axis (33) or coincides therewith.

3. Transfer device according to Claim 2, **characterized in that** the pivot axis (33) is arranged horizontally.

4. Transfer device according to Claim 1, **characterized in that** the pivot axis (33) is orientated transversely with respect to the transporting direction (T) and can be adjusted or moved vertically.

5. Transfer device according to Claim 1, **characterized in that** the stations (2, 3, 4, 5, 6) are pressing stages in which the workpieces are shaped by a ram driven in a reciprocating manner in a machining direction (V), with the pivot axis (33) being orientated in a direction differing from the machining direction (V), preferably at right angles to the latter.

6. Transfer device according to Claim 1, **characterized in that** the linear drive unit (44) has a main drive pinion (42) which can be moved linearly in a direction (V) which is orientated at an angle with respect to the pivot axis (33).

7. Transfer device according to Claim 6, **characterized in that** the direction of movement of the linear drive unit (44) is the vertical direction (V).

8. Transfer device according to Claim 1, **characterized in that** the pivoting drive unit (39) and the linear drive unit (44) each have a servomotor (41, 45) as power source.

9. Transfer device according to Claim 1, **characterized in that** the pivoting arm (27), in a central position or parking position, assumes a vertical position from which it can pivot out to both adjacent stations (2, 3) by an essentially identical angular amount in or counter to the transporting direction (T).

10. Transfer device according to Claim 1, **characterized in that** the mechanism (23) is a lever mechanism to which the pivoting arm (27) belongs.

11. Transfer device according to Claim 9, **characterized in that** the lever mechanism (23) produces a multiplied curve of movement at its main drive pinion (26).

12. Transfer device according to Claim 1, **characterized in that** the transfer module (15) has two mechanisms (23, 24) which are mirror-symmetrical to each other, **in that** the workpiece-retaining means (28) is a deflector bridge, and **in that** the deflector bridge is carried at its two ends by a respective pivoting arm (27) of one of the mechanisms (23).

13. Transfer device according to Claim 1, **characterized in that** the transfer module (15) is assigned at least one weight-relieving device (48).

14. Transfer device according to Claim 1, **characterized in that** the transfer curve (K) has two independent movement components (V, T) in which paths of different length are traversed, with the linear drive unit (44) being assigned to the short path and the pivoting drive unit (39) being assigned to the long path.

15. Transfer device according to Claim 9, **characterized in that** the lever mechanism (23) is arranged in a vertical plane.

16. Transfer device according to Claim 9, **characterized in that** all of the joint and pivot axes (33, 37, 38, 51) of the lever mechanism (23) are arranged horizontally and transversely with respect to the transporting direction (T).

## Revendications

1. Dispositif de transfert (1), en particulier pour le transfert de pièces, notamment de pièces de carrosserie pour véhicules automobiles, entre des stations (2, 3, 4, 5, 6) dune installation de façonnage, en particulier entre des étages de presse d'une presse à stations multiples,
comprenant des modules de transfert (14, 15, 16, 17, 18, 19) qui sont disposés entre des stations (2, 3, 4, 5, 6) dune installation,
chaque module de transfert (14, 15, 16, 17, 18, 19) comportant au moins un moyen de support de pièce (28) pouvant être commandé, qui est agencé pour coupler temporairement la pièce à un dispositif porteur (29, 30), et
chaque module de transfert (14, 15, 16, 17, 18, 19) comportant au moins un mécanisme (23) pourvu d'un bras oscillant (27) qui est relié au moyen de support de pièce (28) et conduit ce dernier sur une courbe de transfert (K) au moins bidimensionnelle, ainsi qu'au moins une unité d'entraînement linéaire (44) et une unité d'entraînement en oscillation (39) au moyen de laquelle le bras oscillant (27) peut être entraîné en oscillation autour d'un axe d'oscillation (33),
dans lequel l'axe d'oscillation (33) du bras oscillant (27) entraîné par l'unité d'entraînement en oscillation (39) est orienté clans une direction qui s'écarte de la verticale (V), **caractérisé en ce que** l'unité d'entraînement linéaire (44) est de préférence montée en position fixe sur les montants de la presse et l'unité d'entraînement en rotation (39) est disposée sur un dispositif porteur (42) entraîné en mouvement par l'unité d'entraînement linéaire (44).

2. Dispositif de transfert selon la revendication 1, **caractérisé en ce que** l'unité d'entraînement en oscillation (39) comporte un organe de sortie (38) dont l'axe de rotation est orienté parallèlement à l'axe d'oscillation (33) ou coïncide avec celui-ci.

3. Dispositif de transfert selon la revendication 2, **caractérisé en ce que** l'axe d'oscillation (33) est disposé horizontalement.

4. Dispositif de transfert selon la revendication 1, **caractérisé en ce que** l'axe d'oscillation (33) est orienté transversalement à la direction de transport (T) et peut être décalé ou déplacé dans la direction verticale.

5. Dispositif de transfert selon la revendication 1, **caractérisé en ce que** les stations (2, 3, 4, 5, 6) sont des étages de presse dans lesquelles les pièces sont transformées par un coulisseau entraîné en va-et-vient dans une direction de façonnage (V), l'axe d'oscillation (33) étant orienté dans une direction qui s'écarte de la direction de façonnage (V), de préférence orienté perpendiculairement à celle-ci.

6. Dispositif de transfert selon la revendication 1, **caractérisé en ce que** l'unité d'entraînement linéaire (44) comporte un organe de sortie (42) qui peut se déplacer linéairement dans une direction (V) qui est orientée en formant un angle avec l'axe d'oscillation (33).

7. Dispositif de transfert selon la revendication 6, **caractérisé en ce que** la direction du mouvement de l'unité d'entraînement linéaire (44) est la direction verticale (V).

8. Dispositif de transfert selon la revendication 1, **caractérisé en ce que** l'unité d'entraînement en rotation (39) et l'unité d'entraînement linéaire (44) comportent chacune un servomoteur (41, 45) en tant que source d'entraînement.

9. Dispositif de transfert selon la revendication 1, **caractérisé en ce que** le bras oscillant (27) prend, dans sa position médiane ou d'arrêt, une position verticale à partir de laquelle il peut osciller dune valeur angulaire à peu près identique dans la direction de transport (T) et dans la direction opposée, pour se diriger vers les deux stations voisines (2, 3).

10. Dispositif de transfert selon la revendication 1, **caractérisé en ce que** le mécanisme (23) est un mécanisme à leviers auquel appartient le bras oscillant (27).

11. Dispositif de transfert selon la revendication 9, **caractérisé en ce que** le mécanisme (23) produit à son organe de sortie (26) une courbe de mouvement superposée.

12. Dispositif de transfert selon la revendication 1, **caractérisé en ce que** le module de transfert (15) comporte deux mécanismes (23, 24) symétriques l'un de l'autre en miroir, **en ce que** le moyen de support de pièce (28) est une barre de ventouses et **en ce que** la barre de ventouses est supportée à chacune de ses deux extrémités par un bras oscillant (27) de l'un des mécanismes (23).

13. Dispositif de transfert selon la revendication 1, **caractérisé en ce qu'**au moins un dispositif de décharge du poids (48) est associé au module de transfert (15).

14. Dispositif de transfert selon la revendication 1, **caractérisé en ce que** la courbe de transfert (K) présente deux composantes de mouvement indépendantes (V, T) dans lesquelles des courses de différentes longueurs sont parcourues, l'unité d'entraînement linéaire (44) étant associée à la course courte et l'unité d'entraînement en oscillation (39) étant associée à la course longue.

15. Dispositif de transfert selon la revendication 9, **caractérisé en ce que** le mécanisme à leviers (23) est disposé dans un plan vertical.

16. Dispositif de transfert selon la revendication 9, **caractérisé en ce que** tous les axes d'articulation et d'oscillation (33, 37, 38, 51) du mécanisme à leviers (23) sont disposés horizontalement et transversalement à la direction de transport (T).
